# EUROPEAN PATENT APPLICATION

(11) **EP 2 631 111 A1**
(43) Date of publication of application: **28.08.2013**
(21) Application number: 12156656.6
(22) Date of filing: 23.02.2012
(51) Int. Cl.: B60N 2/16, B60N 2/42

(54) **A height adjustable seat base for vehicles**

(71) Applicant: BE-GE JANY A/S, 7741 Frøstrup (DK)
(72) Inventor: Jepsen, Dennis Stjernholm, DK-9690 Fjerritslev (DK); Kanstrup, Kristian, DK-7752 Snedsted (DK)
(74) Representative: Plougmann & Vingtoft A/S

(57) **Abstract**

The invention relates to a height adjustable seat base for vehicles which is provided with reinforcement means or stop means, for example rails 201, 202, which prohibits a forward motion of the displaceable base part of the seat base in case of a frontal collision of the vehicle with another object. Thus the rails 201, 202 provide a stop for forward motion of the displaceable base part so that other parts of the seat base are not loaded by collision forces. Thereby, the rails 201, 202 provide a reinforcement of the seat base.

## Description

### FIELD OF THE INVENTION

The invention relates to height adjustable seat bases for vehicles and a method for manufacturing of such bases, particularly for such seat bases which are configured to withstand frontal collision forces in case of a frontal impact of the vehicle.

### BACKGROUND OF THE INVENTION

In order to improve comfort for workers who are seated many hours in a seat in a vehicle each day such as postmen, seats which have height adjustable capabilities like office chairs have been required.

However, such height adjustable seats or seat bases are not sufficiently strong to withstand high collision forces, particularly due to frontal collisions. This is particularly the case for seats where the seat-belt system is integrated with the seat. As a consequence, the seat may not be sufficiently secured during a collision implying that the seated person may be injured if the seat moves forward due to a frontal collision.

Accordingly, there is a need to improve the strength of height adjustable seats and height adjustable seat bases in order to better withstand collisions such as frontal collisions.

US5782533 discloses a vehicle seat which comprises stopping means that serve to conduct forces introduced via a movable belt mounting point during a frontal impact directly to the side rail, without having to transmit the entire load via the adjusting mechanism. A vehicle seat includes a seat frame having a seat belt mounting point, and an upper rail that is connected to the seat frame by at least one adjusting lever and at least one compensating lever extending from the upper rail to the seat frame. The seat includes a height adjusting mechanism for adjusting the height of the seat frame. The height adjusting mechanism includes a drive shaft connected to an end of the adjusting lever, wherein rotation of the shaft effects vertical movement of the adjusting lever and height adjustment of the seat frame. The seat includes a stopping means that limits a maximum adjustment path of the seat frame, wherein in a stop position a belt force from the seat frame is introduced directly into the upper rail and bypasses the adjusting mechanism.

Accordingly, the inventor of the present invention has appreciated that an improved seat base and seat is of benefit, and has in consequence devised the present invention.

### SUMMARY OF THE INVENTION

It would be advantageous to achieve improvements for seat bases and seats for vehicles. It would also be desirable to make such seat bases and seats more secure in case of frontal impacts. In general, the invention preferably seeks to mitigate, alleviate or eliminate the above mentioned disadvantages. In particular, it may be seen as an object of the present invention to provide a method that solves the above mentioned problems with lack of strength in case of frontal impacts, or other problems, of the prior art.

To better address one or more of these concerns, in a first aspect of the invention a height adjustable seat base for vehicles is presented that comprises,
- a stationary base configured to be fixated to the vehicle,
- a displaceable base being displaceable relative to the stationary base part so as to enable height adjustment of the displaceable base part, where the displaceable base is configured to be fixed to a seat,
- a load receiver arranged relative to the stationary base,
- a load transmitter arranged relative to the displaceable base, where the load transmitter is linearly displaceable along a length of the load receiver in a direction of the height adjustment and configured to contact with the load receiver in case of a frontal impact of the vehicle so as to provide a stop for the displaceable base.

Since the load transmitter is linearly displaceable along a length of the load receiver, i.e. so that the load transmitter moves parallel with the load receiver, there may always be a short distance or contact between a contact surface of the load transmitter and a contact surface of the load receiver so that, irrespective of the height adjustment of the displaceable part, there is always a short travel distance from the load transmitter to the load receiver so that in case of a frontal impact the displaceable part will immediately be stopped since only a very limited travel of the displaceable part in the impact direction is possible.

In an embodiment a separation between a contact surface of the load receiver and a contact surface of the load transmitter is constant or substantially constant along a height adjustable range of the height adjustment. Since the load transmitter is configured to move parallel with the load receiver, the separation, i.e. clearance, between the contact surfaces may be made sufficiently small and constant or substantially constant over the height adjustable range. It is understood that the separation or clearance may be zero so that a contact surface of the load receiver contacts a contact surface of the load transmitter, or the separation may be greater than zero, preferably in the range between 0.2 and 1 mm.

In an embodiment at least one of the load receiver and the load transmitter comprises a contact surface which extends along a height adjustable range of the height adjustment. A contact surface which extends along the height adjustable range may be advantageous since such a surface enables a substantially constant separation between opposite surfaces of the load transmitter and load receiver. Such a continuous contact surface may be embodied by a rail having a contact surface extending along the rail.

In an embodiment the load receiver and the load transmitter are arranged to prohibit a forward or backward rotation of the displaceable base in case of a frontal impact of the vehicle. The prevention of a forward or backward rotation may particularly be easy achievable by use of a load transmitter and a load receiver as defined in the first aspect.

In an embodiment the stationary base at least partly circumscribes the displaceable base so that an inner surface of the stationary base faces an outer surface of the displaceable base, and the load receiver is fixed to the inner surface of stationary base and the load transmitter is fixed to the outer surface of the displaceable base.

An embodiment the height adjustable seat base comprises first and second load receivers and first and second load transmitters arranged to contact with the respective first and second load receivers and arranged so that a center of mass are located between the first and second load receivers so as to distribute contact forces evenly between first and second load receivers. For example, the first load receiver and load transmitter may be placed one a left-side part of the seat base and the second load receiver and load transmitter may be placed to a right-side part of the seat base, on a line which is substantially perpendicular to the forward direction of the vehicle.

An embodiment of the height adjustable seat base comprises a linear guide for guiding the displaceable base during the height adjustment. The linear guide may be a separate component or the linear guide may be embodied by the load transmitter and the load receiver.

In an embodiment the load receiver comprises a receiver rail and the load transmitter comprises a transmitter rail arranged parallel with the receiver rail. The use of rails for the load transmitter and receiver may particularly advantageous for achieving a simple and strong reinforcement of the seat base capable of transferring collision forces to the chassis of the vehicle without damaging the seat base beyond acceptable limits.

In an embodiment the load receiver comprises first and second receiver rails and the load transmitter comprises a transmitter rail arranged parallel with and between the first and second receiver rails, or the load receiver comprises a receiver rail and the load transmitter comprises first and second transmitter rails arranged parallel with the receiver rail so that the receiver rail is located between the transmitter rails. The use of two receiver rails or two transmitter rails may be advantageous for improving the capabilities of the seat base to withstand rotation moments of the displaceable base caused by a frontal impact. Furthermore, the use of two receiver rails makes different orientations of the seat base possible without compromising the reinforcement capabilities of the load transmitter and load receiver.

A second aspect of the invention relates to a seat comprising
- a height adjustable seat base according to the first aspect, and
- a seat connectable with the displaceable base.

A third aspect of the invention relates to a method for manufacturing a height adjustable seat base for vehicles, where the method comprises,
- providing a stationary base configured to be fixated to the vehicle,
- providing a displaceable base being displaceable relative to the stationary base part so as to enable height adjustment of the displaceable base part, where the displaceable base is configured to be fixed to a seat,
- providing a load receiver arranged relative to the stationary base,
- providing a load transmitter arranged relative to the displaceable base, where the load transmitter is linearly displaceable along the load receiver in a direction of the height adjustment and configured to contact with the load receiver in case of a frontal impact of the vehicle so as to provide a stop for the displaceable base.

The manufacturing process further comprises assembling the parts into the seat base.

In summary the invention relates to a height adjustable seat base for vehicles which is provided with reinforcement means or stop means, for example rails, which prevents a forward motion of the displaceable base part of the seat base in case of a frontal collision of the vehicle with another object. Thus the rails provide a stop for forward motion of the displaceable base part so that other parts of the seat base are not loaded by collision forces. Thereby, the rails provide a reinforcement of the seat base.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a side view of a seat base 100,
Fig. 2A shows a cross sectional top view of the seat base 100,
Fig. 2B and 2C show examples of load receivers 201 and load transmitters 202,
Fig. 3 shows a front view of the seat base with indication of views AA and BB,
Fig. 4A shows the view AA showing a height adjustment actuator 401,
Fig. 4B shows the view BB showing a separate displacement guide 422, and
Fig. 5 shows an embodiment where the load receiver comprises a plurality of protruding contact members arranged to contact with a plurality of protruding contact members of the load transmitter in case of an impact.

### DETAILED DESCRIPTION OF EMBODIMENTS

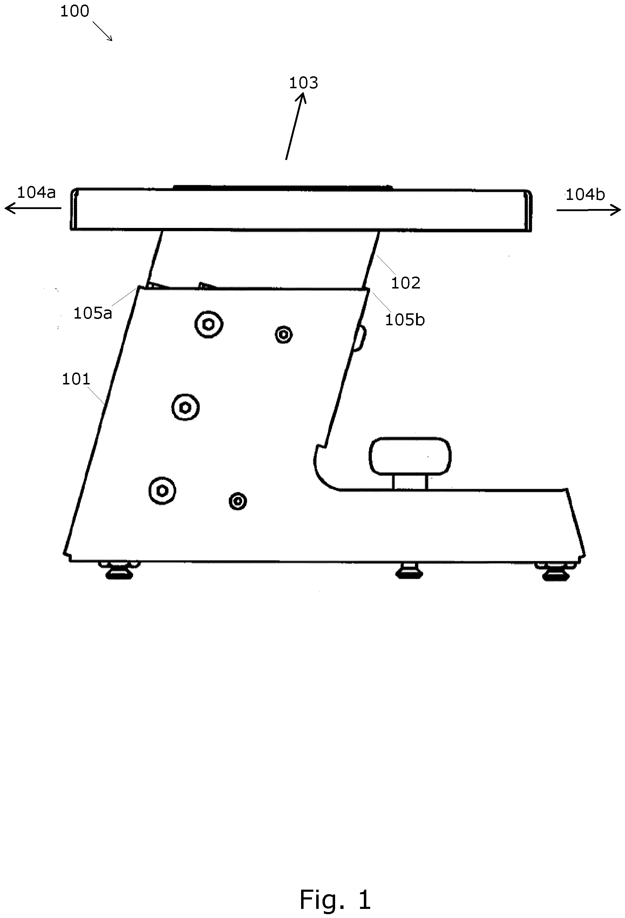

Fig. 1 shows a height adjustable seat base 100 for vehicles which includes a stationary base 101 configured to be fixated to the vehicle and a displaceable base 102 being displaceable relative to the stationary base part 101 so as to enable height adjustment of the displaceable base part 101. The displaceable base 102 is configured to be fixed to a seat for vehicles.

The stationary base 101 may be fixated, e.g. releasable fixated, to a chassis of the vehicle. However, in order to improve the strength of the fixation of the stationary base 101, the stationary base may alternatively be fixated to a reinforcement of the chassis, e.g. a new floor system or a plate reinforcement of the chassis.

In addition to a height adjustable seat base 100, the invention also relates to a seat for a vehicle which comprises the height adjustable seat base 100 and a seat connectable with the displaceable base. The seat may be of a type where the seat-belt dispenser and belt-lock is fixed to the seat implying that the adjustable seat base 100 is fully loaded by impact forces acting on a seated person due to a frontal or backward impacts, i.e. all forces are transferred to the chassis of the vehicle via the seat base 100.

The height adjustable seat base 100 may include means for adjusting the height of the displaceable base 102, e.g. a gas cylinder including a handle for activating the gas cylinder, a linear displacement motor including electric control buttons for controlling the motor, or any other active or manual systems capable of displacing the displaceable base. The displaceable base and the attached seat are displaceable in a direction of the height adjustment 103 which may be vertical, substantially vertical such as slightly directed in a forward direction 104.

When a person is seated in a seat fixed to the seat base 100, the front of the person points in the front direction 104a. The seat base 100 may be arranged within the vehicle so that the front direction 104a points in the forward driving direction of the vehicle or against the forward driving direction of the vehicle, i.e. the back direction 104b of the seat base 100 may point in the forward moving direction. In case of a frontal collision of the vehicle, the seat and a seated person are affected by a force acting in front direction 104a or the back direction 104b depending on the orientation of the seat base 100. This force will force the displaceable base 102 to move forward (in the driving direction) and, thereby, load the stationary base 101. Due to the center of mass of the seat and the seated person the impact force will cause the displaceable part into a combined forward/backward and rotational motion which motion is primarily counter-acted by the upper edge 105a of the stationary part 101 when the front direction 104a points in the driving direction and the upper edge 105b when the back direction 104b points in the driving direction. Thus, the upper edge 105a,b is affected by large forces and will therefore deform. The deformation, which may be a permanent deformation, implies that the displaceable base 102, the seat and the seated person moves forward so that the seated person risks injuries from impacts with parts of the vehicle, e.g. the steering wheel, a chair, a table or other seats.

Collision deformations of a seat base which is not reinforced, i.e. deformations of any of the upper edges 105a-b, may not be within acceptable limits according to standards for such seat bases and seats. Particularly, it may be desirable that the seat base 100 satisfies the highest standard requirements, such as the M1 requirements for seats for vehicles up to 3500 kg having capacity for up to 9 persons including the driver.

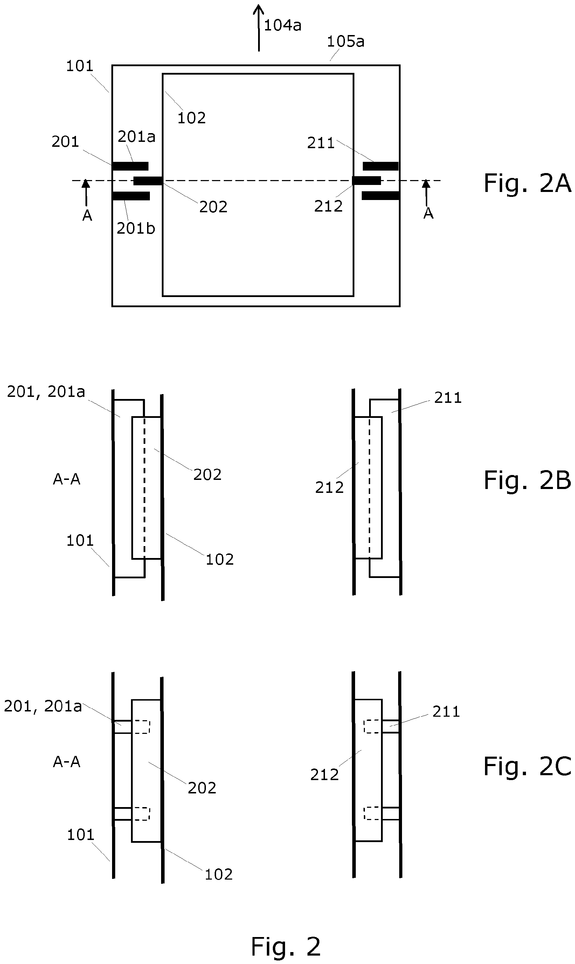

Fig. 2A shows the stationary base 101 and the displaceable base 102 in a principal sketch of a top view of the seat base 100 of Fig. 1. In order to avoid deformation of the edges 105a,b of the stationary base 101 in case of a frontal collision, the seat base 100 is reinforced by fixation of a load receiver 201 to the stationary base 101 and fixation of a load transmitter 202 to the displaceable base. The load transmitter 202 is linearly displaceable along the load receiver 201 in a direction of the height adjustment 103. In case of a frontal impact, the load transmitter 202 may displace a short distance (substantially in direction 104) towards the load receiver 201 before the load transmitter makes contact with the load receiver (or the load transmitter is already in contact with the load receiver). Thereby, the load receiver provides a stop for the displaceable base and the load transmitter so that in case of a frontal impact the load receiver 201 - not the edges 105a,b - receives the major part of the impact forces from the seat or possibly the seat and seated person (depending on the seat belt configuration) via the load transmitter 202.

Thereby, the displaceable part need not be constructed to be able to withstand high impact forces, only the load receiver 201 and the load transmitter 202 need to be constructed to transfer such impact forces, i.e. such that large deformations of the involved parts are avoided or minimized. Accordingly, the load receiver 201 and the load transmitter are designed to be able to transfer the impact forces without being deformed beyond acceptable limits (e.g. set by certain standards), so that the seated person does not risk injuries due to an undesired forward or backward motion of the person during a frontal impact. The design of the load transmitter and load receiver is obtained possibly by use of high strength steel and/or by suitable dimensioning of the involved parts, including the load transmitter the load receiver and fixation means of these parts.

Each of the stationary base 101 and the displaceable base 102 may be constructed as tubes, e.g. rectangular tubes as shown in Fig. 2A, so that the tube of the displaceable base 102 is contained within the tube of the stationary base. However, the stationary base 101 and/or the displaceable base 102 need not be constructed as tube-like designs with a closed circumference, but may alternatively be constructed from bars and/or lattice constructions having a non-closed circumference, i.e. a partly closed circumference.

Thus, the stationary base 101 may be configured to at least partly circumscribe the displaceable base 102 so that an inner surface of the stationary base faces an outer surface of the displaceable base. The load receiver 201 may be fixed to the inner surface, e.g. an inner surface of a tube-like construction, a lattice construction, a bar construction or similar constructions. Similarly, the load transmitter 202 may be fixed to the outer surface of the construction of the displaceable part.

Other design options for the stationary base 101 and the displaceable base 102 are also possible. For example, the stationary base could be circumscribed by the displaceable base and the load receiver 201 would then be fixed to the outer surface of the stationary base and the load transmitter 202 would then be placed at the inner surface of the displaceable base.

Still other constructions of the stationary base 101 and displaceable base 102, where the stationary base 101 does not circumscribe the displaceable base 102, or opposite, may also be envisaged. For example, the stationary base 101 and the displaceable base 102 may each be constructed as bars arranged relative to each other, e.g. opposite to each other. Also in this case, load receivers 201 and load transmitters 202 may be arranged on the bars in order to avoid deformations of the stationary base part 101.

Fig. 2A shows that the load receiver 201 is embodied as first and second load receiver elements 201a and 201b. Alternatively or additionally, the load transmitter 202 may be embodied as first and second load transmitter elements. Even though the use of a single load receiver element 201 and a single load transmitter element 202 provides a stop and prohibits a forward rotation of the displaceable base in case of a frontal impact of the vehicle, the use of two load receiver elements 201a, 201b or two load transmitter elements may improve the strength of the load-transmitter-receiver construction to better prohibit a forward rotation of the displaceable base.

The height adjustable seat base 100 may have first and second load receivers 201, 211 and first and second load transmitters 202, 212 arranged to contact with the respective first and second load receivers so as to distribute contact forces evenly between first and second load receivers. As shown in the example in Fig. 2A, the first and second load receivers 201, 211 and first and second load transmitters 202, 212 may be arranged opposite to each other in a direction which is perpendicular or substantially perpendicular to the forward direction 104 and so that the they are arranged approximately symmetrically with respect to a center of mass of the displaceable base 102, i.e. so that the center of mass is located between the first and second load receivers 201, 211.

Fig. 2B shows a view A-A along the length of the load receiver 201 and the load transmitter 202. In Fig. 2B each load receiver 201, 201a, 211 is embodied as a receiver rail and each load transmitter 202, 212 is embodied as a transmitter rail arranged parallel with the receiver rail. For example, the rails may be constituted by u-rails, v-rails or L-rails where one flange of the rail is attached to a surface of the stationary and displaceable bases, e.g. by use of bolts or by welding.

Whereas any of the load receivers or load transmitters may be separate parts which may attached to the bases, the load receivers and/or load transmitters may alternatively be integrally formed with the stationary and displaceable bases. For example, any of the load receivers and load transmitters may be integrally formed with the stationary and displaceable bases by use of extrusion where e.g. flanges or pins of the load receivers or load transmitters are extruded from parts (e.g. plate parts) of the stationary and displaceable bases. Thus, the load receivers or load transmitters may be fixed or otherwise arranged relative to the stationary and displaceable bases.

The rails may be configured so that irrespectively of the height adjustment of the displaceable part 102, the load transmitter rail 202 is always fully supported by the load receiver rail 201, e.g. so that the load transmitter rail does not extend beyond the length of the load receiver rail 201.

The load receiver 201 may be constituted by a single receiver rail 201a and the load transmitter 201 be constituted by a single transmitter rail 202 arranged parallel to each other. Preferably, as shown in Fig. 2A, the load receiver 201 may have first and second receiver rails 201a, 201b and the load transmitter 202 may have a single transmitter rail arranged parallel with and between the first and second receiver rails. Alternatively, the load receiver 201 may constituted by a single receiver rail and the load transmitter may be constituted by first and second transmitter rails arranged parallel with the receiver rail so that the receiver rail is located between the transmitter rails. The use of two transmitter rails or two receiver rails in the above configuration may improve the capability of the seat base 100 to withstand rotation moments, i.e. to withstand a forward or backward rotation of the displaceable base. Furthermore, the use of two transmitter rails or two receiver rails in the above configuration enables the seat base to withstand both frontal and backward impacts. Also, the use of two transmitter rails or two receiver rails in the above configuration enables fixations of the seat base where the front direction 104a points in the driving direction or the back direction 104b points in the driving direction.

Fig. 2C shows an alternative configuration of the load receiver 201 and the load transmitter, where as exemplified by Fig. 2C, the load receiver 201, 211 or a first load receiver 201a is configured as pins instead of a rail, and the load transmitter 202, 212 is configured as a rail. Alternatively, the load transmitter 202, 212 could be configured as pins and the load receiver could be configured as a rail.

In general the load receiver 201 and the load transmitter 202 are configured so that a separation between a contact surface of the load receiver and a contact surface of the load transmitter is constant or substantially constant along the height adjustable range of the height adjustment function. The separation between the contact surfaces may be substantially zero so that the load receiver 201 and the load transmitter 202 are permanently in contact, or the separation may be in the range from 0.1 mm to 5 mm, preferably in the range from 0.5 mm to 2 mm.

When e.g. the load transmitter is constituted by two transmitter rails and the load receiver is constituted by a single rail, the single rail of the load receiver has two opposite contact surfaces, and the contact surfaces of the transmitter rails are arranged adjacent to the contact surfaces of the receiver rails.

At least one of the load receiver 201,211 and the load transmitter 202,212 has a contact surface which is plane along the height adjustable range. For example, the rails shown in Fig. 2B and 2C has a continuous plane contact surface along the length of the rail. The rails may have other profiles to form possibly non-plane contact surfaces which are curved or has other shapes along the length of the rail.

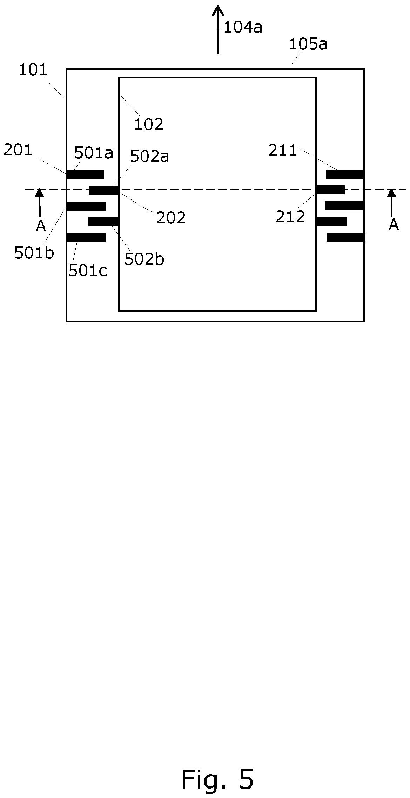

Each of the load receiver 201 and the load transmitter 202 may comprise a plurality of protruding contact features (e.g. rails or pins) arranged so that a plurality of the contact features of the load receiver 201 are in engagement with a plurality of contact features of the load transmitter 202. Fig. 5 shows an embodiment of load receiver 201 and the load transmitter 202 where each of the load receivers 201,211 comprises a plurality of protruding contact features 501a-501c and each of the load transmitters 202,212 comprises a plurality of protruding contact features 502a-502b which are in engagement with the plurality of contact features 501a-501c of the load receivers. The embodiment of Fig. 5 is equivalent with other embodiments of Fig. 2A-C with respect to the configuration of the load receivers and load transmitters and other configurations of the seat base 100.

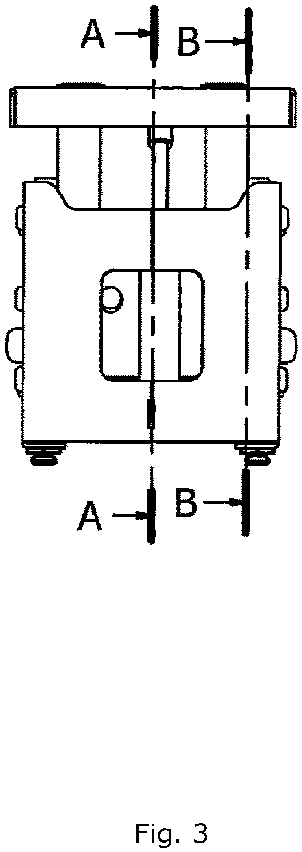

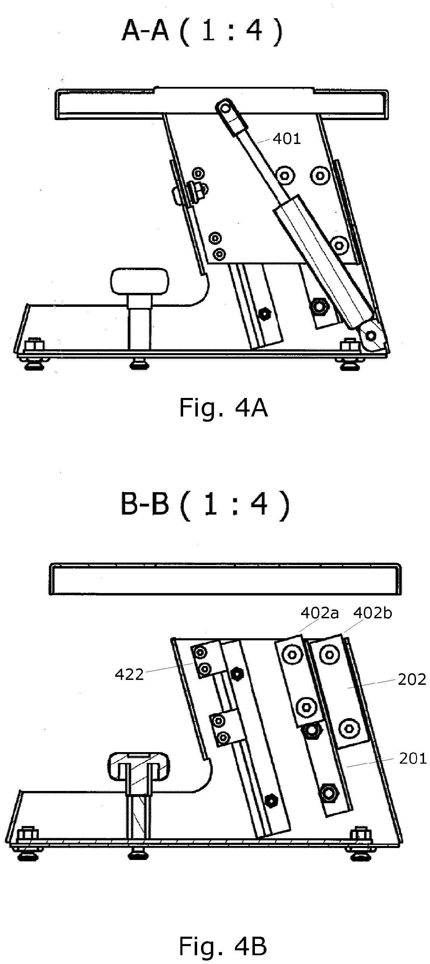

Fig. 3 shows a front view of the seat base 100 shown in Fig. 1 with indication of views AA and BB. Fig. 4A shows the view AA and Fig.4B shows the view BB.

Fig. 4A shows an example of a height adjustment means 401 in the form of a gas cylinder for adjusting the height of the displaceable base 102. In order to guide the displaceable base 102 during a height adjustment, the height adjustable seat base 100 may further comprise a linear guide, i.e. a rail system. Fig. 4B shows an example of a linear guide 422.

In a possible embodiment the load receiver 201 and the load transmitter 202 are configured both as a means for transfer of impact forces and as a linear guide 422.

Fig. 4B also illustrates an example of a load receiver 201 and a load transmitter 202. Here the load receiver 201 is configured as a single rail and the load transmitter 202 is configured with first and second rails 402a and 402b located on both sides of the load receiver 201 so that first and second contact surfaces of the respective first and second rails 402a and 402b faces respective first and second contact surfaces of the load receiver rail 201.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

Any reference signs in the claims should not be construed as limiting the scope.

## Claims

1. A height adjustable seat base (100) for vehicles comprising,
- a stationary base (101) configured to be fixated to the vehicle,
- a displaceable base (102) being displaceable relative to the stationary base part so as to enable height adjustment of the displaceable base part, where the displaceable base is configured to be fixed to a seat,
- a load receiver (201, 201a, 201b, 211) arranged relative to the stationary base,
- a load transmitter (202, 402,a, 402b, 212) arranged relative to the displaceable base, where the load transmitter is linearly displaceable along the load receiver in a direction of the height adjustment (103) and configured to contact with the load receiver in case of a frontal impact of the vehicle so as to provide a stop for the displaceable base.

2. A height adjustable seat base according to claim 1, where a separation between a contact surface of the load receiver and a contact surface of the load transmitter is constant or substantially constant along a height adjustable range of the height adjustment.

3. A height adjustable seat base according to claim 1, where at least one of the load receiver and the load transmitter comprises a contact surface which extend along a height adjustable range of the height adjustment.

4. A height adjustable seat base according to claim 1, where the load receiver and the load transmitter are arranged to prohibit a forward/backward rotation of the displaceable base in case of a frontal impact of the vehicle.

5. A height adjustable seat base according to claim 1, where the stationary base at least partly circumscribes the displaceable base so that an inner surface of the stationary base faces an outer surface of the displaceable base, and where the load receiver is arranged relative to the inner surface of stationary base and the load transmitter is arranged relative to the outer surface of the displaceable base.

6. A height adjustable seat base according to claim 1, comprising first and second load receivers (201, 211) and first and second load transmitters (202, 212) arranged to contact with the respective first and second load receivers and arranged so that a center of mass are located between the first and second load receivers (201, 211) so as to distribute contact forces substantially evenly between first and second load receivers.

7. A height adjustable seat base according to claim 1, further comprising a linear guide (422) for guiding the displaceable base during the height adjustment.

8. A height adjustable seat base according to claim 1, where the load receiver comprises a receiver rail and the load transmitter comprises a transmitter rail arranged parallel with the receiver rail.

9. A height adjustable seat base according to claim 1, where the load receiver comprises first and second receiver rails and the load transmitter comprises a transmitter rail arranged parallel with and between the first and second receiver rails, or where the load receiver comprises a receiver rail and the load transmitter comprises first and second transmitter rails arranged parallel with the receiver rail so that the receiver rail is located between the transmitter rails.

10. A seat comprising
- a height adjustable seat base according to claim 1, and
- a seat connectable with the displaceable base.

11. A method manufacturing a height adjustable seat base for vehicles, the method comprises,
- providing a stationary base configured to be fixated to the vehicle,
- providing a displaceable base being displaceable relative to the stationary base part so as to enable height adjustment of the displaceable base part, where the displaceable base is configured to be fixed to a seat,
- providing a load receiver arranged relative to the stationary base,
- providing a load transmitter arranged relative to the displaceable base, where the load transmitter is linearly displaceable along the load receiver in a direction of the height adjustment and configured to contact with the load receiver in case of a frontal impact of the vehicle so as to provide a stop for the displaceable base.
